# EUROPÄISCHE PATENTSCHRIFT

(11) **EP 1 752 365 B1**
(45) Veröffentlichungstag und Bekanntmachung des Hinweises auf die Patenterteilung: **08.09.2010**
(21) Anmeldenummer: 05017329.3
(22) Anmeldetag: 09.08.2005
(51) Int. Cl.: B62D 59/04

(54) **Sicherheitseinrichtung für einen Hilfsantrieb eines Anhängers**
Safety device for a trailer auxiliary drive
Dispositif de sécurité pour un entraînement auxiliaire de remorque

(43) Veröffentlichungstag der Anmeldung: 14.02.2007
(73) Patentinhaber: Truma Gerätetechnik GmbH & Co. KG, 85640 Putzbrunn (DE)
(72) Erfinder: Kastenmeyer, Herbert, 83043 Bad Aibling (DE); Brandtner, Josef, 82110 Germering (DE); Wickelmaier, Peter, 81671 München (DE); Müller, Jörg, 86916 Kaufering (DE); Dunkel, Artur, 81677 München (DE)
(74) Vertreter: Müller - Hoffmann & Partner

(56) Entgegenhaltungen:
- EP-A- 1 394 024
- DE-A1- 2 711 214
- FR-A- 2 786 456

## Beschreibung

Die Erfindung liegt auf dem technischen Gebiet der Anhängertechnik und betrifft eine Sicherheitseinrichtung für einen Hilfsantrieb eines Anhängers, insbesondere Wohnwagen.

Ein Transport von Anhängern, insbesondere Wohnwagen, erfolgt gewöhnlich durch Anhängen an ein Zugfahrzeug, wofür auch ein Personenkraftwagen (PKW) verwendet werden kann. Ein Rangieren des Anhängers in eine Abstell- bzw. Parkposition ist mit dem Zugfahrzeug jedoch aus Platzgründen nicht immer möglich, so dass der Anhänger abgehängt und manuell rangiert werden muss, was jedoch aufgrund von Größe und Gewicht eines Anhängers ein schwieriges Unterfangen darstellen kann, und gegebenenfalls durch Bodenunebenheiten und einen nichtwaagerechten Untergrund noch weiter erschwert wird.

Um ein Rangieren von Anhängern ohne Zugfahrzeug zu erleichtern, sind spezielle Hilfsantriebe entwickelt worden, die es ermöglichen, einen Anhänger mit Motorunterstützung zu rangieren.

So wird von der Anmelderin ein Hilfsantrieb für einen Wohnwagen im Handel vertrieben, bei dem ein Rahmenteil fest mit dem Fahrgestell des Anhängers verbunden ist und der Rahmenteil einen relativ zu dem Rahmenteil bewegbaren Träger stützt, von dem wiederum ein Antriebsmotor mit einer von dem Antriebsmotor antreibbaren Antriebswalze gehalten wird. Weiterhin ist ein Bewegungsmechanismus, genauer Kniehebelmechanismus, vorgesehen, um den Träger zwischen einer Ruheposition, in der die Antriebswalze von einem Reifen des Anhängers getrennt ist, und einer Antriebsposition, in der die Antriebswalze gegen den Reifen des Trägers gedrückt wird, zu verschwenken. Um den Träger zu verschwenken, wird ein Betätigungshebel bzw. eine Kurbel an dem Träger angesetzt, was wegen der zum Überwinden des Kniehebelmechanismus erforderlichen Kräfte einen entsprechend großen Schwenkwinkel für den Betätigungshebel erfordert und dem Bediener einen entsprechend hohen Kraftaufwand in einer ungünstigen Körperhaltung abverlangt, um die Mittelstellung des Kniehebelmechanismus zu überwinden.

Um eine Bedienung des Hilfsantriebs für den Bediener komfortabler zu gestalten, ist für den Bewegungsmechanismus ein Servoantrieb vorgesehen, durch welchen der Träger zwischen der Ruheposition und der Antriebsposition bewegbar ist, so dass eine manuelle Betätigung des Trägers überflüssig ist. Der Bediener kann dann mit Hilfe des beispielsweise fernsteuerbaren Servoantriebs den Träger in die jeweils gewünschte Position verfahren.

Ein solcher Servoantrieb kann beispielsweise ein elektrisches, elektrohydraulisches, elektromagnetisches, hydraulisches, hydro-pneumatisches oder pneumatisches Stellglied aufweisen. Seine Energieversorgung kann durch eine in dem Anhänger vorhandene Batterie oder durch eine eigene Energieversorgung übernommen werden. Weiterhin kann ein solcher Servoantrieb beispielsweise einen elektrischen Hilfsmotor mit Getriebe aufweisen. Um den Hilfsmotor entsprechend klein zu dimensionieren, kann das Getriebe einen Spindeltrieb mit hohem Übersetzungsverhältnis haben, welcher es ermöglicht, dass der Motor mit verhältnismäßig hohen Drehzahlen aber niedrigem Drehmoment arbeiten kann.

Wenn das Fahrgestell des Anhängers wenigstens zwei Räder aufweist, kann jedem Rad eine eigene Antriebswalze zugeordnet sein, wobei der Servoantrieb aber nur einen gemeinsamen Hilfsmotor aufweisen kann, mit dem gleichzeitig beide Träger zwischen der Ruheposition und der Antriebsposition bewegt werden können. Der Hilfsmotor kann in diesem Fall in der Mitte zwischen den beiden Rädern angeordnet sein.

Wenn der Servoantrieb per Funk ferngesteuert werden kann, kann trotz üblicher Sicherheitsmaßnahmen, wie dem gleichzeitigen Drücken zweier Auslösetasten auf einem Funksignalgeber zum Auslösen des Servoantriebs, der Fall eintreten, dass ein unbeabsichtigtes Bewegen des Trägers in seine Antriebsposition erfolgt. Grund hierfür kann ein gleichwohl mögliches Betätigen beider Auslösetasten, etwa durch ein Tragen der Fernbedienungseinheit in einer Gesäß- oder Brusttasche, oder aber ein Drücken der Auslösetasten durch Kinder sein, welche im Spiel wahllos auf die Tasten des Funksignalgebers drücken. Weiterhin ist denkbar, dass eine elektromagnetische Störstrahlung von einer Funkempfangseinheit einer Steuereinheit des Servoantriebs fälschlicherweise als Bewegungssignal zum Bewegen des Trägers in seine Antriebsposition empfangen wird. Darüber hinaus kann nicht ausgeschlossen werden, dass der Servoantrieb seinerseits einer Fehlfunktion unterliegt, beispielsweise ein Defekt in der Funkempfangseinheit oder Steuereinheit, wodurch ungewollt ein Bewegen des Trägers in seine Antriebsposition ausgelöst wird.

Ein solches unbeabsichtigtes Bewegen des Trägers in seine Antriebsposition kann jedoch während der Fahrt fatale Konsequenzen nach sich ziehen, da das entsprechende Rad durch die Antriebswalze gebremst oder blockiert wird, so dass der Anhänger ins Schlingern geraten kann und ein Unfall eine wahrscheinliche Folge ist. Ein solches Schlingern wird stets dann der Fall sein, wenn ein Rad auf lediglich einer Seite einer Anhängerachse gebremst bzw. blockiert wird, jedoch ist auch bei einer auf beiden Seiten der Anhängerachse auftretenden Bremsung bzw. Blockierung von Rädern ein Schlingern des Anhängers wahrscheinlich, da aufgrund von unvermeidlichen Montage- und Fertigungstoleranzen bei der Fertigung des Hilfsantriebs stets mit einer zeitlichen Verzögerung bis zum Erreichen der jeweiligen Antriebspositionen der Träger zu rechnen ist, so dass eine Bremsung bzw. Blockierung der Räder zeitverschoben auf den beiden Anhängerachsenseiten auftreten kann. Darüber hinaus ist aufgrund solcher Montage- und Fertigungstoleranzen auch mit einer unterschiedlichen Bremswirkung der Antriebswalzen auf die beiderseits einer Anhängerachse befindlichen Räder zu rechnen.

Aus der FR 2786456A, die im Oberbegriff der Ansprüche 1 und 5 berücksichtigt ist, ist eine Sicherheitselinrichtung für einen Hilfsantrieb eines Anhängers bekannt. Der Hilfsantrieb weist eine Antriebswalze auf, die durch Bewegen eines Trägers zwischen einer Ruheposition, in der die Antriebswalze von einem Rad des Anhängers getrennt ist, und einer Antriebsposition, in der die Antriebswalze gegen das Rad des Anhängers gedrückt wird, bewegbar ist. Die Sicherheitseinrichtung ist mit einem elektrischen Unterbrecherschalter ausgerüstet, der in zwei Schaltzustände schaltbar ist. Im ersten Schaltzustand ist der Träger in seine Antriebsposition bewegbar, während er im zweiten Schaltzustand nicht in seine Antriebsposition bewegt werden kann.

Der Erfindung liegt die Aufgabe zugrunde, eine Sicherheitseinrichtung für einen Hilfsantrieb eines Anhängers zur Verfügung zu stellen, durch welche ein unbeabsichtigtes selbsttätiges Bewegen des Trägers in seine Antriebsposition sicher verhindert werden kann.

Diese Aufgabe wird nach dem Vorschlag der Erfindung durch eine Sicherheitseinrichtung mit den Merkmalen der unabhängigen Ansprüche gelöst. Vorteilhafte Ausgestaltungen der Erfindung sind durch die Merkmale der Unteransprüche angegeben.

Gemäß einem ersten Aspekt der Erfindung ist eine Sicherheitseinrichtung für einen Hilfsantrieb eines Anhängers gezeigt, bei welcher der Hilfsantrieb mit einem starr mit einem Fahrgestell des Anhängers verbundenen Rahmenteil, einem relativ zum Rahmenteil bewegbaren Träger, einem von dem Träger gehaltenen Antriebsmotor, einer an dem Träger gelagerten, von dem Antriebsmotor antreibbaren Antriebswalze, sowie mit einem Bewegungsmechanismus zum Bewegen des Trägers zwischen einer Ruheposition, in der die Antriebswalze von einem Rad des Anhängers getrennt ist, und einer Antriebsposition, in der die Antriebswalze gegen das Rad des Anhängers gedrückt wird, ausgestattet ist. Der Bewegungsmechanismus ist hierbei mit einem insbesondere funkfernsteuerbaren Servoantrieb zum Bewegen des Trägers zwischen der Ruheposition und der Antriebsposition versehen, so wie er eingangs beschrieben worden ist. Zur Steuerung des Servoantriebs ist eine Steuereinheit vorgesehen, welche zum Empfangen von Funksteuersignalen mit einer Funkempfangseinheit für Funksteuersignale eines Funksignalgebers verbunden sein kann. Die Funkempfangseinheit kann in der Steuereinheit des Servoantriebs integriert sein.

Weiterhin ist der Anhänger in herkömmlicher Weise mit einem Steckverbindungselement für eine elektrische Steckverbindung zu einem Zugfahrzeug ausgerüstet, wobei das Steckverbindungselement des Anhängers ("Anhänger-Steckverbindungselement") in ein passendes Gegensteckverbindungselement des Zugfahrzeugs ("Zugfahrzeug-Gegensteckverbindungselement") eingesteckt werden kann. Die elektrische Steckverbindung umfasst typischer Weise einen am Anhänger angebrachten Stecker ("männliches" Steckverbindungselement), welcher in eine Steckbuchse ("weibliches" Steckverbindungselement) des Zugfahrzeugs steckbar ist, wobei Anhänger und Zugfahrzeug standardmäßig mit 7- oder 13-poligen Steckverbindungen ausgestattet sind. Die elektrische Steckverbindung wird gewöhnlich zur Ansteuerung von Signalleuchten des Anhängers, wie Rücklichter, Bremslichter, Rückfahrscheinwerfer, Nebellicht, Blinklichter und dergleichen, eingesetzt. Dabei ist der Stecker typisch als "fliegender Stecker" ausgeführt, welcher frei an einem Kabel hängt und während der Fahrt in die Steckbuchse des Zugfahrzeugs eingesteckt sein muss, um eine Ansteuerung der Signalleuchten des Anhängers zu ermöglichen.

Die erfindungsgemäße Sicherheitseinrichtung für einen Hilfsantrieb eines Anhängers, insbesondere Wohnwagen, zeichnet sich nun in wesentlicher Weise dadurch aus, dass sie mit einem zum Anhänger-Steckverbindungselement passenden, am Anhänger angebrachten Gegensteckverbindungselement ("Anhänger-Gegensteckverbindungselement") ausgerüstet ist, welches mit dem Servoantrieb so wirkgekoppelt ist (d. h. in Wirkverbindung steht), dass lediglich bei einem in das Anhänger-Gegensteckverbindungselement eingesteckten Anhänger-Steckverbindungselement der Träger des Hilfsantriebs in seine Antriebsposition bewegt werden kann, während er andererseits bei einem nicht in das Anhänger-Gegensteckverbindungselement eingesteckten Anhänger-Steckverbindungselement nicht in seine Antriebsposition bewegt werden kann. Mit anderen Worten kann durch ein Einstecken des Anhänger-Steckverbindungselements in das Anhänger-Gegensteckverbindungselement und die hierdurch erfolgende Aktivierung des Servoantriebs verhindert werden, dass der Träger unbeabsichtigt in seine Antriebsposition bewegt wird. Eine solche Aktivierung bzw. Inaktivierung des Servoantriebs kann beispielsweise dadurch erfolgen, dass die Stromversorgung des Servoantriebs bei in dem Anhänger-Gegensteckverbindungselement eingesteckten Anhänger-Steckverbindungselement aufrecht erhalten und bei nicht in dem Anhänger-Gegensteckverbindungselement eingestecktem Anhänger-Steckverbindungselement unterbrochen ist. Das Steckverbindungselement des Anhängers dient also, neben seiner Aufgabe als Teil der Steckverbindung zur Ansteuerung von Signalleuchten des Anhängers, als Teil der erfindungsgemäßen Sicherheitseinrichtung zum Verhindern eines unbeabsichtigten Bewegens des Trägers in seine Antriebsposition. Da das Steckverbindungselement des Anhängers während der Fahrt in dem Gegensteckverbindungselement des Zugfahrzeugs stecken muss, ist sichergestellt, dass der Servoantrieb während der Fahrt inaktiviert ist. Erst wenn das Zugfahrzeug steht und das Steckverbindungselement des Anhängers aus dem Gegensteckverbindungselement des Zugfahrzeugs genommen und in das Gegensteckverbindungselement des Anhängers bzw. der Sicherheitseinrichtung gesteckt wird, ist der Servoantrieb aktiviert und der Träger kann in seine Antriebsposition bewegt werden. Da es sich bei dem Steckverbindungselement des Anhängers typischer Weise um einen Stecker handelt, ist das Gegensteckverbindungselement der Sicherheitseinrichtung im Allgemeinen als Steckerbuchse ausgebildet. Jedoch ist auch möglich, dass das Steckverbindungselement als Steckerbuchse und das Gegensteckverbindungselement als Stecker ausgebildet sind.

Vorteilhaft ist zwischen dem Anhänger-Gegensteckverbindungselement der Sicherheitseinrichtung und der Steuereinheit des Hilfsantriebs eine elektrische Leitung vorgesehen, welche als Steuerleitung für die Wirkkopplung des Anhänger-Gegensteckverblndungselements mit der Steuereinheit dient. Zu diesem Zweck kann beispielsweise ein Massenanschluss des Anhänger-Steckverbindungselements durch das Anhänger-Gegensteckverbindungselement kontaktiert sein, wodurch die Steuereinheit "erkennt", dass das Anhänger-Steckverbindungselement eingesteckt ist.

Gemäß einem zweiten Aspekt der Erfindung ist eine Sicherheitseinrichtung für einen Hilfsantrieb eines Anhänger gezeigt, welcher mit einem starr mit einem Fahrgestell des Anhängers verbundenen Rahmenteil, einem relativ zum Rahmenteil bewegbaren Träger, einem von dem Träger gehaltenen Antriebsmotor, einer an dem Träger gelagerten, von dem Antriebsmotor antreibbaren Antriebswalze, sowie mit einem Bewegungsmechanismus zum Bewegen des Trägers zwischen einer Ruheposition, in der die Antriebswalze von einem Rad des Anhängers getrennt ist, und einer Antriebsposition, in der die Antriebswalze gegen das Rad des Anhängers gedrückt wird, ausgestattet ist. Der Bewegungsmechanismus ist hierbei mit einem steuerbaren, insbesondere funksteuerbaren, Servoantrieb zum Bewegen des Trägers zwischen der Ruheposition und der Antriebsposition versehen, so wie er eingangs beschrieben worden ist. Zur Steuerung des Servoantriebs ist eine Steuereinheit vorgesehen, welche beispielsweise, jedoch nicht zwingend, zum Empfangen von Funksteuersignalen mit einer Funkempfangseinheit für Funksteuersignale eines Funksignalgebers ausgerüstet ist.

Die Sicherheitseinrichtung für einen Hilfsantrieb eines Anhängers gemäß dem zweiten Aspekt der vorliegenden Erfindung zeichnet sich nun in wesentlicher Weise dadurch aus, dass sie mit einem elektrischen Schaltrelais ausgerüstet ist, welches wenigstens in einen ersten und zweiten Schaltzustand schaltbar ist. Der erste Schaltzustand des Schaltrelais kann hierbei einem geschlossenen Schalter des Schaltrelais entsprechen, während der zweite Schaltzustand einem offenen Schalter entsprechen kann. Weiterhin ist das Schaltrelais mit dem Servoantrieb so wirkgekoppelt, dass der Träger bei dem in den ersten Schaltzustand geschaltetem Schaltrelais in seine Antriebsposition bewegt werden kann, während er bei dem in den zweiten Schaltzustand geschalteten Schaltrelais nicht in seine Antriebsposition bewegt werden kann. Mit anderen Worten kann durch Schalten des Schaltrelais in den ersten Schaltzustand, was durch den Bediener beispielsweise durch Drücken einer Taste eines Funksignalgebers erfolgen kann, ein Bewegen des Trägers in seine Antriebsposition ermöglicht werden.

Das Schaltrelais ist vorteilhaft zeitgesteuert, zu welchem Zweck ein Steuereinheit für das Schaltrelais vorgesehen ist, die das Schaltrelais nach Ablauf einer wählbaren Zeitspanne selbsttätig vom ersten Schaltzustand in den zweiten Schaltzustand schaltet. Auf diese Weise kann erreicht werden, dass dem Bediener nach Schalten des Schaltrelais in den ersten Schaltzustand eine wählbare Zeitspanne von beispielsweise fünf Minuten zur Verfügung steht, um den Träger in seine Antriebsposition zu bewegen. Nach Ablauf der Zeitspanne von beispielsweise fünf Minuten verhindert das Schaltrelais ein Bewegen des Trägers in seine Antriebsposition, indem beispielsweise die Stromzufuhr des Servoantriebs durch das in seinen zweiten Schaltzustand geschaltete Schaltrelais unterbrochen wird. Durch das zeitsteuerbare Schaltrelais kann somit verhindert werden, dass beispielsweise nach dem Rangieren des Anhängers zum Zugfahrzeug und Anhängen des Anhängers an das Zugfahrzeug während der Fahrt ein Bewegen des Trägers in seine Antriebsposition erfolgt, da dann die Zeitspanne, in der der Servoantrieb aktiviert ist, im Allgemeinen bereits verstrichen ist.

Die Erfindung erstreckt sich ferner auf einen Hilfsantrieb eines Anhängers, insbesondere Wohnwagen, welcher mit einer wie oben beschriebenen Sicherheitseinrichtung ausgerüstet ist. Weiterhin erstreckt sich die Erfindung auf einen Anhänger, insbesondere Wohnwagen, welcher mit einem solchen Hilfsantrieb mit einer erfindungsgemäßen Sicherheitseinrichtung ausgerüstet ist.

Diese und weitere vorteilhafte Merkmale der Erfindung werden nachfolgend unter Zuhilfenahme der begleitenden Figuren näher erläutert. Es zeigen:
- **Fig. 1**: eine schematische perspektivische Ansicht eines Gespanns aus PKW und angehängtem Wohnwagen mit in eine PKW-Steckbuchse eingesteckten Anhänger-Stecker;
- **Fig. 2**: eine schematische perspektivische Ansicht des Gespanns von Fig. 1 mit in die Anhänger-Steckbuchse eingestecktem Anhänger-Stecker.

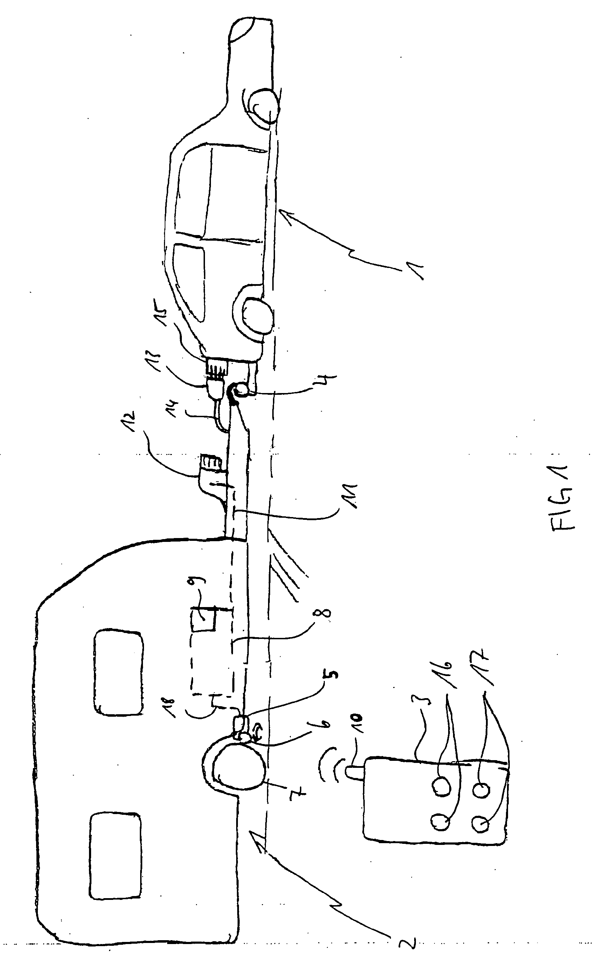

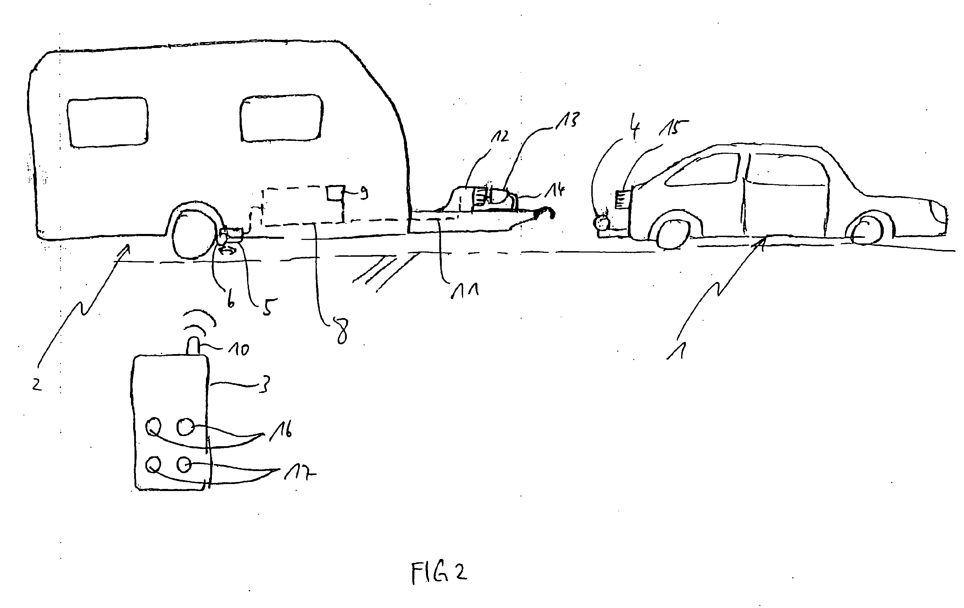

Es wird nun Bezug auf die Fig. 1 und 2 genommen, worin perspektivische Ansichten eines Gespanns aus PKW als Zugfahrzeug und Wohnwagen als Anhänger dargestellt sind. Der PKW, welcher insgesamt mit der Bezugszahl 1 bezeichnet ist, ist mit einer Anhängerkupplung 4 ausgerüstet, an welcher der Wohnwagen, welcher insgesamt mit der Bezugszahl 2 bezeichnet ist, angehängt (Fig. 1) bzw. abgehängt (Fig. 2) ist. Im angehängten Zustand des Wohnwagens ist ein Anhänger-Stecker 13 in eine PKW-Steckerbuchse 15 des PKW 1 eingesteckt, wodurch Signalleuchten des Wohnwagens 2, wie Rücklichter, Bremslicht, Blinklichter und dergleichen, gesteuert werden können.

Weiterhin ist der Wohnwagen 2 mit einem Rangier-Hilfsantrieb 5 ausgerüstet, welcher ein starr mit einem nicht näher dargestellten Fahrgestell des Anhängers verbundenes nicht näher dargestelltes Rahmenteil, einen relativ zu dem Rahmenteil bewegbaren nicht näher dargestellten Träger, einen von dem Träger gehaltenen nicht näher dargestellten Antriebsmotor, eine an dem Träger gelagerte, von dem Antriebsmotor antreibbare Antriebswalze 6, sowie einen nicht näher dargestellten Bewegungsmechanismus zum Bewegen des Trägers zwischen einer Ruheposition, in der die Antriebswalze von einem Rad des Anhängers getrennt ist, und einer Antriebsposition, in der die Antriebswalze gegen das Rad des Anhängers gedrückt wird, umfasst. Der Bewegungsmechanismus weist hierbei einen nicht näher dargestellten steuerbaren Servoantrieb wie einen Hilfsmotor zum Bewegen des Trägers zwischen der Ruheposition und der Antriebsposition auf, welcher durch eine Steuereinheit 8 gesteuert ist, die ihrerseits über eine elektrische Verbindungsleitung 18 mit dem Servoantrieb verbunden ist. Die Antriebswalze 6 kann durch Bewegen des Trägers in den durch den Doppelpfeil angegebenen Richtungen zu dem Rad hin bzw. von dem Rad weg bewegt werden.

In der Steuereinheit 8 ist weiterhin eine Funkempfangseinheit 9 integriert, durch welche Funksignale eines Funksignalgebers 3 empfangen werden können, die durch eine Antenne 10 von dem Funksignalgeber 3 abgestrahlt werden. Zur Steuerung des Hilfsantriebs bzw. des Servoantriebs zur Bewegung des Trägers mit der Antriebswalze in Richtung zum Rad hin bzw. in Richtung vom Rad weg umfasst der Funksignalgeber 3 vier Tasten, wobei beispielsweise die beiden oberen Tasten 16 gleichzeitig gedrückt werden müssen, um eine Bewegung des Trägers in seine Antriebsposition mit an das Rad gedrückter Antriebswalze auszulösen. Um zu bewirken, dass der Träger wieder seine Ruheposition einnimmt, müssen beispielsweise die beiden unteren Tasten 17 gleichzeitig gedrückt werden. In dem Rangier-Hilfsantrieb des Wohnwagens der Fig. 1 und 2 kann an beiden Rädern der Anhängerachse jeweils eine Antriebswalze in eine Antriebsposition gebracht werden.

Ferner ist in dem Wohnwagen 2 der Fig. 1 und 2 eine Anhänger-Steckbuchse 12 vorgesehen, welche mit der Steuereinheit 8 der Hilfseinrichtung über eine Steuerleitung 8 verbunden ist. Die Anhänger-Steckbuchse 12 ist so mit der Steuereinheit 8 wirkgekoppelt, das bei Einstecken des Anhänger-Steckers 13 in die Anhänger-Steckbuchse 12 der Träger mit der Antriebswalze eines jeden Rads der Anhängerachse in seine Antriebsposition bewegt werden kann und nicht in seine Antriebsposition bewegt werden kann, wenn der Anhänger-Stecker 13 nicht in die Anhänger-Steckbuchse 12 eingesteckt ist. Fig. 1 zeigt eine Situation, in welcher der Anhänger-Stecker 13 nicht in die Anhänger-Steckbuchse 12, sondern in die PKW-Steckbuchse 15 eingesteckt ist, während Fig. 2 eine Situation zeigt, in der bei abgehängtem Wohnwagen 2 der Anhänger-Stecker 13 in die Anhänger-Steckbuchse 12 eingesteckt ist. Ein einfaches Wechseln des Anhänger-Steckers 13 zwischen der PKW-Steckbuchse 15 und der Anhänger-Steckbuchse 12 ist durch den frei am Kabel 14 hängenden Anhänger-Stecker 13 ermöglicht. Wenn der Anhänger-Stecker 13 in die Anhänger-Steckbuchse 12 eingesteckt ist, ist ein Massenanschluss des Anhänger-Steckers 13 in elektrischem Kontakt mit einem Massenanschluss der Anhänger-Steckbuchse 12, wodurch die Steuereinheit 8 über die Steuerleitung 11 "erkennt", dass der Anhänger-Stecker 13 eingesteckt ist und den Servorantrieb aktiviert, indem beispielsweise eine Unterbrechung einer Stromversorgung des Servorantriebs aufgehoben wird.

## Patentansprüche

1. Sicherheitseinrichtung für einen Hilfsantrieb (5) eines Anhängers (2), wobei der Anhänger (2) mit einem Steckverbindungselement (13) für eine elektrische Steckverbindung zu einem Zugfahrzeug (1) ausgerüstet ist, und wobei der Hilfsantrieb (5) umfasst:
- ein starr mit einem Fahrgestell des Anhängers verbundenes Rahmenteil;
- einen relativ zu dem Rahmenteil bewegbaren Träger;
- einen von dem Träger gehaltenen Antriebsmotor;
- eine an dem Träger gelagerte, von dem Antriebsmotor antreibbare Antriebswalze (6);
- einen Bewegungsmechanismus zum Bewegen des Trägers zwischen einer Ruheposition, in der die Antriebswalze (6) von einem Rad (7) des Anhängers (2) getrennt ist, und einer Antriebsposition, in der die Antriebswalze (6) gegen das Rad (7) des Anhängers (2) gedrückt wird, wobei der Bewegungsmechanismus einen steuerbaren Servoantrieb zum Bewegen des Trägers zwischen der Ruheposition und der Antriebsposition aufweist;
**dadurch gekennzeichnet, dass** die Sicherheitseinrichtung aufweist:
- das Steckverbindungselement (13) des Anhängers (2);
- ein zum Steckverbindungselement (13) des Anhängers (2) passendes, an dem Anhänger (2) vorgesehenes Gegensteckverbindungselement (12);
- eine Wirkverbindung zwischen dem Gegensteckverbindungselement (12) und dem Servoantrieb, derart, dass dann, wenn das Steckverbindungselement (13) nicht in das Gegensteckverbindungselement (12) eingesteckt ist, ein Bewegen des Trägers in seine Antriebsposition sperrbar ist, indem der Servoantrieb inaktiviert und so der Träger nicht in seine Antriebsposition bewegbar ist.

2. Sicherheitseinrichtung nach Anspruch 1, **dadurch gekennzeichnet, dass** sie eine elektrische Steuerleitung (11) zwischen dem Gegensteckverbindungselement (12) des Anhängers (2) und einer Steuereinheit (8) des Servoantriebs zu Steuerung der Bewegung des Trägers zwischen der Ruheposition und der Antriebsposition umfasst.

3. Sicherheitseinrichtung nach Anspruch 2, **dadurch gekennzeichnet, dass** bei in das Gegensteckverbindungselement (12) des Anhängers (2) eingestecktem Steckverbindungselement (13) des Anhängers (2) ein Massenanschluss des Steckverbindungselements (13) durch das Gegensteckverbindungselement (12) kontaktiert ist.

4. Sicherheitseinrichtung nach einem der Ansprüche 1 bis 3, **dadurch gekennzeichnet, dass** eine Steuereinheit (8) des Servoantriebs eine Empfangseinheit (9) für Funksteuersignale eines Funksignalgebers (3) enthält.

5. Sicherheitseinrichtung für einen Hilfsantrieb (5) eines Anhängers (2), welcher Hilfsantrieb (5) umfasst:
- ein starr mit einem Fahrgestell des Anhängers verbundenes Rahmenteil;
- einen relativ zu dem Rahmenteil bewegbaren Träger;
- einen von dem Träger gehaltenen Antriebsmotor;
- eine an dem Träger gelagerte, von dem Antriebsmotor antreibbare Antriebswalze (6);
- einen Bewegungsmechanismus zum Bewegen des Trägers zwischen einer Ruheposition, in der die Antriebswalze (6) von einem Rad (7) des Anhängers (2) getrennt ist, und einer Antriebsposition, in der die Antriebswalze (6) gegen das Rad (7) des Anhängers (2) gedrückt wird, wobei der Bewegungsmechanismus einen steuerbaren Servoantrieb zum Bewegen des Trägers zwischen der Ruheposition und der Antriebsposition aufweist;
**dadurch gekennzeichnet, dass** die Sicherheitseinrichtung aufweist:
- ein elektrisches Schaltrelais, welches wenigstens in einen ersten und einen zweiten Schaltzustand schaltbar ist;
- eine Wirkverbindung zwischen dem Schaltrelais und dem Servoantrieb, derart, dass der Träger durch den Servoantrieb bei in den ersten Schaltzustand geschaltetem Schaltrelais in seine Antriebsposition bewegbar ist, während er bei in den zweiten Schaltzustand geschaltetem Schaltrelais nicht in seine Antriebsposition bewegbar ist; und
- eine Steuereinheit zum Zeitsteuern des Schaltrelais, wodurch bewirkt wird, dass das Schaltrelais nach Ablauf einer wählbaren Zeitspanne selbsttätig von seinem ersten Schaltzustand in seinen zweiten Schaltzustand geschaltet wird.

6. Hilfsantrieb (5) mit einer Sicherheitseinrichtung nach einem der Ansprüche 1 bis 5.

7. Anhänger mit einem Hilfsantrieb (5) nach Anspruch 6.

## Claims

1. Safety device for an auxiliary drive (5) of a trailer (2), wherein the trailer (2) is equipped with a plug-type connection element (13) for an electric plug-type connection to a traction vehicle (1), and wherein the auxiliary drive (5) comprises:
- a frame part connected rigidly to a chassis of the trailer;
- a support element, which can be moved relative to the frame part;
- a drive motor supported by the support element;
- a drive roller (6), which can be driven by the drive motor and is mounted on the support element;
- a movement mechanism for moving the support element between a position of rest, in which the drive roller (6) is separated from a wheel (7) of the trailer (2), and a drive position, in which the drive roller (6) is pressed against the wheel (7) of the trailer (2), wherein the movement mechanism comprises a controllable servo drive for moving the support element between the position of rest and the drive position;
**characterised in that** the safety device comprises:
- the plug-type connection element (13) of the trailer (2);
- a counter plug-type connection element (12) adapted to the plug-type connection element (13) of the trailer (2) and provided on the trailer (2);
- an operational connection between the counter plug-type connection element (12) and the servo drive in such a way that when the plug-type connection element (13) is not inserted in the counter plug-type connection element (12) movement of the support element into its drive position can be blocked insofar as the servo drive is deactivated and the support element cannot therefore be moved into its drive position.

2. Safety device according to claim 1, **characterised in that** it comprises an electric control line (11) between the counter plug-type connection element (12) of the trailer (2) and a control unit (8) of the servo drive for controlling the movement of the support element between the position of rest and the drive position.

3. Safety device according to claim 2, **characterised in that** when the plug-type connection element (13) of the trailer (2) is inserted in the counter plug-type connection element (12) of the trailer (2) an earth connection of the plug-type connection element (13) is contacted through the counter plug-type connection element (12).

4. Safety device according to one of the claims 1 to 3, **characterised in that** a control unit (8) of the servo drive contains a receiving unit (9) for radio control signals of a radio signal sensor (3).

5. Safety device for an auxiliary drive (5) of a trailer (2), which auxiliary drive (5) comprises:
- a frame part connected rigidly to a chassis of the trailer;
- a support element, which can be moved relative to the frame part;
- a drive motor supported by the support element;
- a drive roller (6), which can be driven by the drive motor and is mounted on the support element;
- a movement mechanism for moving the support element between a position of rest, in which the drive roller (6) is separated from a wheel (7) of the trailer (2), and a drive position, in which the drive roller (6) is pressed against the wheel (7) of the trailer (2), wherein the movement mechanism comprises a controllable servo drive for moving the support element between the position of rest and the drive position;
**characterised in that** the safety device comprises:
- an electric switching relay, which can be switched at least into a first and a second switching state;
- an operational connection between the switching relay and the servo drive in such a way that the support element can be moved by the servo drive into its drive position when the switching relay is switched into the first switching state, whereas it cannot be moved into its drive position when the switching relay is switched into the second switching state; and
- a control unit for time control of the switching relay, whereby it is ensured that the switching relay is switched after expiry of a selectable period of time automatically from its first switching state into its second switching state.

6. Auxiliary drive (5) having a safety device according to one of the claims 1 to 5.

7. Trailer having an auxiliary drive (5) according to claim 6.

## Revendications

1. Dispositif de sécurité pour un entraînement auxiliaire (5) d'une remorque (2), la remorque (2) étant équipée d'un élément de connexion à fiches (13) pour une connexion électrique avec un véhicule tracteur (1), et l'entraînement auxiliaire (5) comprenant :
- un élément de châssis qui est relié de manière rigide à un châssis de la remorque ;
- un support mobile par rapport à l'élément de châssis ;
- un moteur d'entraînement supporté par le support ;
- un cylindre d'entraînement (6) monté sur le support et apte à être entraîné par le moteur d'entraînement ;
- un mécanisme de déplacement pour déplacer le support entre une position de repos dans laquelle le cylindre d'entraînement (6) est séparé d'une roue (7) de la remorque (2), et une position d'entraînement dans laquelle le cylindre d'entraînement (6) est pressé contre la roue (7) de la remorque (2), le mécanisme de déplacement comportant un entraînement assisté apte à être commandé pour déplacer le support entre la position de repos et la position d'entraînement ;
**caractérisé en ce que** le dispositif de sécurité comporte :
- l'élément de connexion à fiches (13) de la remorque (2) ;
- un élément de connexion à fiches opposé (12) qui correspond à l'élément de connexion à fiches (13) de la remorque (2) et qui est prévu sur la remorque (2) ;
- une liaison fonctionnelle entre l'élément de connexion opposé (12) et l'entraînement assisté, de telle sorte que lorsque l'élément de connexion (13) n'est pas enfiché dans l'élément de connexion opposé (12), un déplacement du support jusqu'à sa position d'entraînement puisse être empêché grâce au fait que l'entraînement est désactivé et que le support ne peut donc pas être amené dans sa position d'entraînement.

2. Dispositif de sécurité selon la revendication 1, **caractérisé en ce qu'**il comprend une ligne de commande électrique (11) entre l'élément de connexion opposé (12) de la remorque (2) et une unité de commande (8) de l'entraînement assisté, pour commander le déplacement du support entre la position de repos et la position d'entraînement.

3. Dispositif de sécurité selon la revendication 2, **caractérisé en ce que** lorsque l'élément de connexion (13) de la remorque (2) est enfiché dans l'élément de connexion opposé (12) de la remorque (2), un raccordement à la terre de l'élément de connexion (13) est réalisé grâce audit élément de connexion opposé (12).

4. Dispositif de sécurité selon l'une des revendications 1 à 3, **caractérisé en ce qu'**une unité de commande (8) de l'entraînement assisté contient une unité de réception (9) pour des signaux de commande radio d'un émetteur de signaux radio (3).

5. Dispositif de sécurité pour un entraînement auxiliaire (5) d'une remorque (2), lequel entraînement auxiliaire (5) comprend :
- un élément de châssis qui est relié de manière rigide à un châssis de la remorque ;
- un support mobile par rapport à l'élément de châssis ;
- un moteur d'entraînement supporté par le support ;
- un cylindre d'entraînement (6) monté sur le support et apte à être entraîné par le moteur d'entraînement ;
- un mécanisme de déplacement pour déplacer le support entre une position de repos dans laquelle le cylindre d'entraînement (6) est séparé d'une roue (7) de la remorque (2), et une position d'entraînement dans laquelle le cylindre d'entraînement (6) est pressé contre la roue (7) de la remorque (2), le mécanisme de déplacement comportant un entraînement assisté apte à être commandé pour déplacer le support entre la position de repos et la position d'entraînement ;
**caractérisé en ce que** le dispositif de sécurité comporte :
- un relais électrique tout-ou-rien qui est apte à passer au moins dans un premier et dans un second état de commutation ;
- une liaison fonctionnelle entre le relais électrique tout-ou-rien et l'entraînement assisté, de telle sorte que le support est apte à être amené par l'entraînement assisté dans sa position d'entraînement, quand le relais est dans le premier état de commutation, tandis qu'il n'est pas apte à être amené dans sa position d'entraînement quand ledit relais est dans le second état de commutation ; et
- une unité de commande pour temporiser le relais tout-ou-rien, moyennant quoi le relais, après écoulement d'un laps de temps apte à être choisi, est amené automatiquement de son premier état de commutation à son second état de commutation.

6. Entraînement auxiliaire (5) avec un dispositif de sécurité selon l'une des revendications 1 à 5.

7. Remorque avec un entraînement auxiliaire (5) selon la revendication 6.
